# EUROPEAN PATENT SPECIFICATION

(11) **EP 1 183 829 B1**
(45) Date of publication and mention of the grant of the patent: **12.09.2007**
(21) Application number: 00939251.5
(22) Date of filing: 08.06.2000
(51) Int. Cl.: H04L 12/50, H04Q 7/22

(54) **UMTS CIRCUIT SWITCHED DATA USER PLANE**
NUTZEREBENE FÜR LEITUNGSVERMITTELTE DATEN IM UMTS-SYSTEM
PLAN UTILISATEUR DE DONNEES A COMMUTATION DE CIRCUITS DU SYSTEME UTMS

(30) Priority: 08.06.1999 NO 992788
(43) Date of publication of application: 06.03.2002
(73) Proprietor: TELEFONAKTIEBOLAGET LM ERICSSON (publ), 164 83 Stockholm (SE)
(72) Inventor: NICOLAYSEN, Vidar, N-0486 Oslo (NO); RÖNNING, Thor, Christian, N-0751 Oslo (NO)
(74) Representative: Kühn, Friedrich Heinrich
(86) International application number: PCT/SE2000/001170
(87) International publication number: WO 2000/076138

(56) References cited:
- EP-A2- 0 789 499
- WO-A1-99/20067
- WO-A2-98/37721

## Description

### Technical field

The present invention relates to mobile telecommunication, and in particular use of older circuit switched data communication equipment in the new access networks that are under development.

### Technical background

### The problem area

GSM and other digital mobile systems have specific solutions for transporting circuit switched data towards the fixed network through their access network.

A new terrestrial radio access network is constructed for the third mobile generation by 3GPP called UMTS. This access network does not have any defined way of handling circuit switched data.

However, there is still a huge amount of circuit switched data communication equipment installed in the fixed network, and people will like to be able to connect via the new access network technology.

### Known solutions

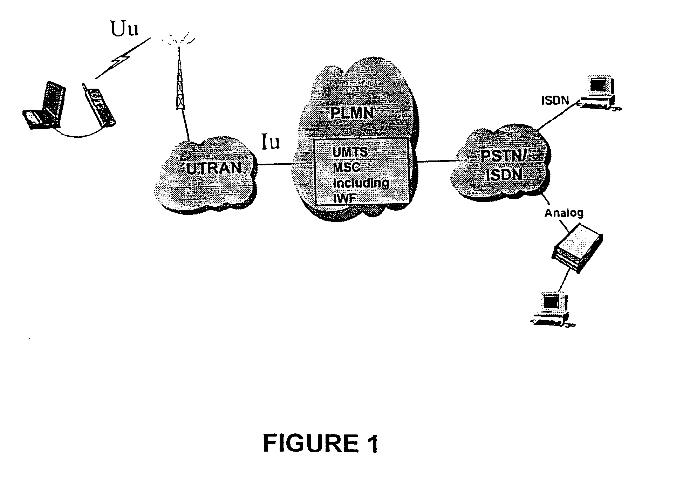

Fig 1 shows the network scenario with a mobile terminal communication through UMTS towards circuit switched data communication equipment installed in the PSTN/ISDN. At the present state of the art, circuit switched calls can be supported in the access networks either by a solution using packet data access or speech transport mechanisms.

### Packet data access

One of the main intentions of the new mobile system is data access. Optimised IP access (Packet access) has been one of the key drivers when developing the improved air interface solution. A user plane protocol stack ensuring the transmission has been created.

The packet access user plane protocol stack is not very optimised for full duplex links with constant bit rate. It has a lot of overhead that is not needed or beneficial for circuit switched connections. The packet access stack is also optimised for handling burst traffic while it is natural to have more constant payload for mobile circuit switched data access.

The packet access stack could be used also for circuit switched connections, but in addition to the above-mentioned disadvantages it would be tricky to support hand over to GSM circuit switched data calls.

### Speech

Speech is also an important service and a solution for ensuring the transport capabilities needed for that, typical low delay and constant bit rate have been specified.

The speech solution has nice transport capabilities for circuit switched calls, but no reliable data transport. The transport have as little delay as possible and are using ATM AAL2 which is optimised for supporting fixed bit rate connections below 64 kbit/s.

If data would be transported in the same way as speech, one would relay on end-to-end fixing of bit errors over the air interface. The protocols supported in fixed network equipment are designed for physical cables, and are not very efficient when used over the air interface which have a lot of interference and very unstable nature compared with wires.

The document WO 98/37721 relates to a cellular radio access network and a location updating in a cordless communication system. Said radio access network is connected to one or more core networks or services, each of them having a dedicated mobility management. A subscriber terminal sends to the radio access network only one location updating message irrespective of how many core networks or services have a simultaneously changing location area at a handover from one cell to another. On this basis the network defines the core networks or services and location areas to which the location updating applies and sends a message to inform the new location of the subscriber.

The document WO 99/20067 relates to access port addressing in a generic radio access network for finding the correct access port when an access attempt is made by a subscriber belonging to a core network that cannot change access port for a particular subscriber.

### Summary of the invention

The invention has as its object to provide a method for communication in the new access networks which permits use of older circuit switched communication equipment without the drawbacks associated with the known methods as mentioned above.

In particular the present invention relates to a method for communication in an UTRAN, comprising a mobile terminal working towards a Mobile Switch Centre with an Interworking Function (IWF). According to the said method circuit switched data are transported in the upper layers from GSM which uses the protocols RLP and L2R, on the transport layers for UMTS speech.

The invention also relates to a system for communication between a terminal in a wireless access network and a fixed network which uses said method.

Further embodiments of the invention will appear from the appended patent claims.

### Brief description of the drawings

The invention will now be described in detail in reference to the appended drawings in which:
Fig. 1 provides a system overview,
Fig. 2 indicates the main protocols and data transport specifications and where they apply in a system according to the invention
Fig. 3 illustrates the stack according to the present invention using GSM-like upper layer protocols and UMTS speech lower layer protocols.

### Description of embodiments

Fig. 1 gives a system overview showing a mobile terminal on the left hand side. UTRAN (UMTS Terrestial Radio Access Network) designates the radio network in which the mobile terminal is communicating trough the Uu interface. UTRAN is the radio part of the UMTS system, while PLMN (Public Land Mobile Network) is the core network behind the UMTS system, i.e. the hardware architecture of switches etc. supporting the UTRAN. The UTRAN is "talking" to the PLMN trough the Iu interface. The UMTS network is connected to the common Public Switched Telephone Network, with its terminals shown on the right hand side.

The basis of this invention is to utilise the upper layers from GSM together with the transport layers for UMTS speech.

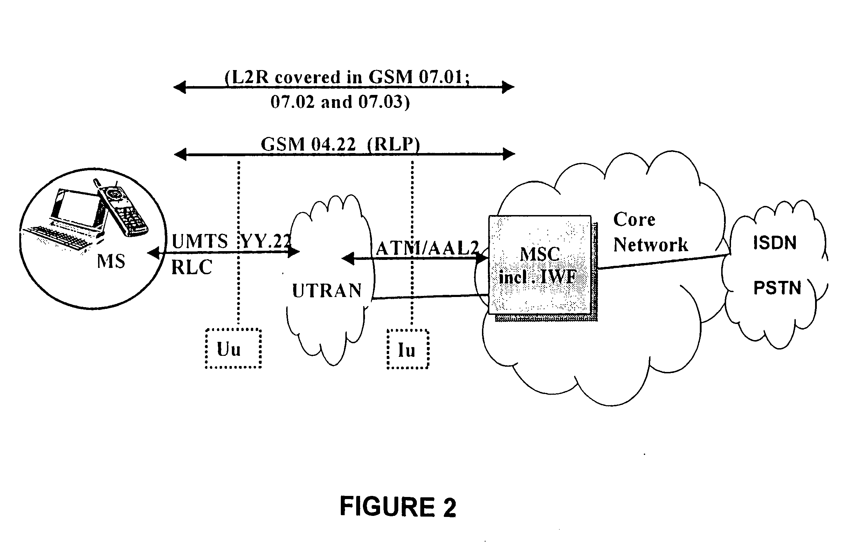

In the further discussion reference is made to Fig. 2 which illustrates the main protocols and data transport mechanisms and how they are arranged in a system according to the present invention. The lower layers are utilised by more services, while the upper layers are specific for circuit switched data communication.

The system contains four major parts in the solution, which will be discussed in detail below.

### The user equipment

This is the physical equipment that the end user will use to communicate over the radio interface. It can, and probably will, be a lot of very different types of equipment. From physical fax machines connected to UMTS mobile phones too integrated devices for video transmission. For this solution it is unimportant whether the user equipment contains one or several physical boxes. The user equipment will need to run the RLP over RLC. (See the protocol chapter for further description.)

### The UTRAN.

This is, like the abbreviation states, the UMTS terrestrial radio access network. The UTRAN has a lot of functionality for handling the radio access. It takes care of the physical air interface, and also takes care of the handovers between different base stations within one UTRAN. One important task of UTRAN related to this invention is the conversion of the actual radio protocols (L1, MAC and RLC) into the Iu protocols (AAL2 and ATM). This conversion is specified for speech, and this invention utilises it. Any speech specific header information added in the Iu framing should be optional and not transported.. Only minor header information is needed containing information like current transport status.

### The UMTS MSC.

This node will handle the call control and mobility management for all circuit switched calls. This functionality is of course also needed for circuit switched data calls. The important task of the UMTS MSC for this invention is the interworking functionality, which is called IWF. The IWF does a conversion between the Iu protocols and the protocols towards the fixed network (see figure 1). In GSM this is a conversion of the GSM V.110 and GSM ATRAU protocols on layer 1 and RLP on top for non-transparent calls to ISDN V.110 and modem protocols (LAPM, V.34 etc.) on the fixed network side.

### The Server.

At the other end, within the fixed network, is the server. This does not necessarily need to be a server. The term refers to all equipment that you would normally connect to like Access Servers, Corporate servers and local modems. In GSM this could also be another mobile, because the IWF functionality would make this invisible for the user equipment. It is an important aspect of the invention that the server does not notice anything about what is happening within UMTS. This is similar to a GSM circuit switched data call.

### The Protocol Stack

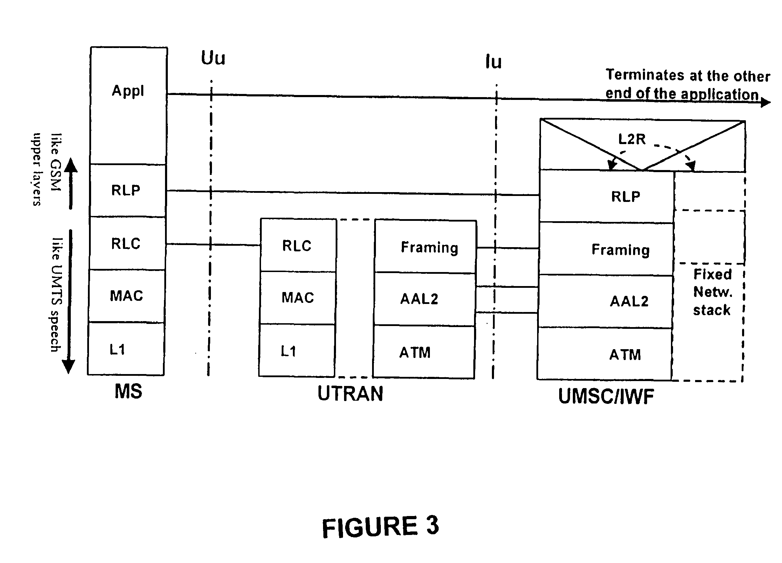

Fig. 3 shows a protocol stack that visualises the solution:

This solution utilises the GSM non-transparent protocols RLP and L2R for ensuring no faults in the user data transmitted. The RLP frames uses the GSM 14.4 RLP format because it introduces less overhead.

The solution utilises the UMTS speech protocols (ATM AAL2) for the lower layer unsecured transport.

The user equipment will map the RLP frames to and from the RLC layer.

The function in UTRAN that does a mapping of speech from RLC to the Iu framing over AAL2, needs some small adjustments to transport the circuit switched data in the same way. The adjustment is to handle the Iu framing header also for data calls.

The IWF needs to place the RLP frames into the Iu framing. No rate adaptation is needed for the transport. This is because of the capabilities of AAL2 [I. 363.2].

### The protocols involved

Reference is again made to Fig. 2 which gives an overview of where the different protocols and specifications apply. We will now give a more detailed discussion of each protocol/layer involved in the inventive method.

### Layer 2 RELay (L2R)

Main purpose of L2R is to provide a flow-control mechanism. This is needed to support non-transparent bearer services. The details of the particular L2R function for the different non transparent bearer services are contained in the appropriate GSM 07-series Specification. See ref. [1], [2] and [3]

The Layer 2 Relay (L2R) function provides for the reliable transportation of known, i.e. non transparent, user protocols across the radio interface of a GSM PLMN. The L2R functions are located in the Mobile Termination (MT) and the Interworking Function (IWF) associated with a Mobile Switching Centre (MSC). The L2R uses the services provided by the Radio Link Protocol (RLP) to transport the non transparent protocol information between the MS and the IWF.

### Radio Link Protocol (RLP)

The main purpose of RLP is to provide a secure and error-free data transport between the mobile station and the IWF.

The Radio Link Protocol (RLP) is specified for data transmission over the GSM PLMN. (see ref.[4]) It is based on ideas from other specifications such X.25 and Q.92x (LAP-B and LAP-D of CCITT, respectively.)

It includes several possibilities to invoke retransmissions if the payload is erroneous. RLP has been tailored to the special needs of digital radio transmission and is intended for use with non-transparent data-transfer.

### Radio Link Control Protocol (RLC)

RLC is defined for the radio interface (Uu) in UMTS. Its main purpose is to ensure transfer of user data over this interface. RLC functions are located in the Mobile Station (MS) and the Radio Access Network (UTRAN). It has the following different modes:
- transparent mode
- unacknowledged mode
- acknowledged mode

The modes offer services with different characteristics to the layers above. The transparent mode provides low delay but rather high error rates. The unacknowledged mode is similar to transparent mode but have some additional functions, but it does not include support for retransmissions.

The acknowledge mode, however support retransmissions and provides an error-free service. It has higher delay than the other modes. The actual delay will depend on the radio conditions.

### For more details see [5]

### Atm Adaptation Layer type 2 (AAL 2)

AAL 2 is a way to transport data on ATM. Compared to other ATM adaptation layers it is most effective for rather small packets. As can be seen from the figure it is goes between UTRAN and the Core Network.

AAL 2 consists of the two parts, the common part and the service specific part.

The common part is specified by recommendation 1.363.2 (see ref. [6]). The AAL type 2 provides for the bandwidth-efficient transmission of low-rate, short, and variable length packets in delay sensitive applications. More than one AAL type 2 user information stream can be supported on a single ATM connection.

Recommendation I.366.1 (see ref.[7]), specifies the Segmentation and Reassembly Service Specific Convergence Sublayer of the ATM Adaptation Layer (AAL) type 2. On one or more AAL type 2 user information streams, the Segmentation and Reassemble Service Specific Convergence Sublayer may be deployed. The sublayer structure, and the procedures for the segmentation and reassembly process, as well as the optional transmission error detection and assured data transfer are defined in depth.

### Advantages

- Hand over towards 2^{nd} generation GSM can easily be handled since this already is defined at the RLP layer.
- Utilises a lot of existing, proven, functionality. Both the higher layer functionality like compression and flow control and the lower layer functionality like ATM VCs.
- The end user can keep his circuit switched datacom equipment and applications on the server (fixed network) side unmodified.
- The radio network transport capabilities are well suited for circuit switched connections.

### Abbreviations

Like most modern areas, the telecom world uses a lot of abbreviations. Here are descriptions for the ones used in this document:
- **AAL2**: ATM Adaptation Layer 2
- **ATM**: Asynchronous Transfer Mode
- **ETSI**: European Telecommunications Standards Institute
- **GSM**: Global System for Mobile communications
- **IP**: Internet Protocol
- **ISDN**: Integrated Services Digital Network
- **Iu**: Interface between UTRAN and Core Network
- **IWF**: Interworking Function (for CS data services)
- **L1**: Layer 1
- **L2R**: Layer 2 relay protocol
- **MAC**: Media Access Control
- **MSC**: Mobile Switching Centre
- **PLMN**: Public Land Mobile Network
- **PSTN**: Public Switched Telephone Network
- **RAB**: Radio Access Bearer
- **RLC**: Radio Link Control
- **RLP**: Radio Link Protocol
- **UE**: User Equipment
- **UMSC**: UMTS Mobile Switching Centre
- **UMTS**: Universal Mobile Telecommunications System
- **UTRAN**: UMTS Terrestrial Radio Access Network
- **Uu**: Interface between UTRAN and the mobile equipment
- **3GPP**: Third generation partnership project created for specifying the third a third generation mobile system. More info available at: http://www.3gpp.org/

### References:

[1] General on Terminal Adaptation Functions (TAF) for Mobile Stations (MS) (ETSI GSM 07.01).
[2] Terminal Adaptation Functions (TAF) for services using asynchronous bearer capabilities (ETSI GSM 07.02).
[3] Terminal Adaptation Functions (TAF) for services using synchronous bearer capabilities (ETSI GSM 07.03).
[4] Radio Link Protocol (RLP) for data and telematic services (ETSI GSM 04.22)
[5] ETSI T.doc SMG2 095/99; UMTS YY.22 Description of RLC,
[6] B-ISDN ATM Adaptation Layer type 2 specification. ITU-T Recommendation 1.363.2
[7] Segmentation and reassembly service specific convergence sublayer for the AAL type 2. ITU-T Recommendation I.366.1.

## Claims

1. Method for communication in an UMTS terrestrial radio access network <UTRAN>, comprising a mobile terminal (MS) working towards a Mobile Switching Centre <MSC> comprising an interworking function <IWF>,
**characterised by**
providing for transport of circuit switched data in upper layers from GSM which uses the protocols RLP and L2R on the transport layers for UMTS speech;
converting the actual radio protocols Layer 1 <L1>, Media Access Control <MAC>, Radio Link Control <RLC> into the Iu protocols ATM Adaptation Layer 2 <AAL2> and Asynchronous Transfer Mode <ATM>;
converting said Iu protocols into protocols used towards a fixed network.

2. The method according to claim 1, whereby the RLP transport is performed according to GSM 14.4 format.

3. System for communication between a terminal <MS> in a wireless access network, said terminal mapping Radio Link Protocol <RLP> frames to and from the Radio Link Control <RLC> layer, and a terminal equipment in a fixed network, said terminal equipment using GSM upper layer protocols RLP and L2R on standard protocols for UMTS speech for lower layer transport, **characterised in**
a UMTS terrestial radio access network <UTRAN> adapted to convert the actual radio protocols Layer 1 <L1>, Media Access Control <MAC>, Radio Link Control <RLC> into the Iu protocols ATM Adaptation Layer 2 <AAL2> and Asynchronous Transfer Mode <ATM>; and
a UMTS Mobile Switching Centre <MSC> comprising an interworking function <IWF> adapted to convert said Iu protocols into the protocols used towards the fixed network.

4. The system as claimed in claim 3, whereby said interworking function <IWF> is adapted to convert from GSM V.110, GSM ATRAU and RLP to ISDN V.110 and/or modem protocols <LAMPM, V.34> on the fixed network side.

## Patentansprüche

1. Verfahren für Kommunikation in einem UMTS-Erd-Funkanschlussnetz <UTRAN>, umfassend ein mobiles Endgerät (MS), das hin zu einer Mobilvermittlungseinrichtung <MSC> arbeitet, die eine Umsetzungsfunktion <IWF> umfasst,
**gekennzeichnet durch**
Bereitstellung des Transports von leitungsvermittelten Daten in oberen Schichten von GSM, der die Protokolle RLP und L2R in den Transportschichten für UMTS-Sprache verwendet;
Umsetzung der gegenwärtigen Funkprotokolle Schicht 1 <L1>, Endgeräte-Anschlusssteuerung <MAC>, Funkverbindungssteuerung <RLC> in die Iu-Protokolle ATM-Anpassungsschicht 2 <AAL2> und Asynchroner Übertragungsmodus <ATM>;
Umsetzung der Iu-Protokolle in Protokolle, die hin zu einem festen Netz verwendet werden.

2. Verfahren nach Anspruch 1, wobei der RLP-Transport nach dem Format GSM 14.4 durchgeführt wird.

3. System für Kommunikation zwischen einem Endgerät <MS> in einem Funkzugangsnetz, wobei das Endgerät Funkverbindungsprotokoll-<RLP>-Rahmen zu und von der Funkverbindungssteuerungs-<RLC>-Schicht abbildet, und eine Endgerätausrüstung in einem festen Netz, wobei die Endgerätausrüstung die Protokolle RLP und L2R der oberen GSM-Schicht an Standardprotokolle für UMTS-Sprache für Transport der unteren Schicht verwendet, **gekennzeichnet durch**
ein UMTS-Erd-Funkanschlussnetz <UTRAN>, angepasst zur Umsetzung der gegenwärtigen Funkprotokolle Schicht 1 <L1>, Endgeräte-Anschlusssteuerung <MAC>, Funkverbindungssteuerung <RLC> in die Iu-Protokolle ATM-Anpassungsschicht 2 <AAL2> und Asynchroner Übertragungsmodus <ATM>; und
eine UMTS-Mobilvermittlungseinrichtung <MSC>, die eine Umsetzungsfunktion <IWF> umfasst, die angepasst ist zur Umsetzung der Iu-Protokolle in die Protokolle, die hin zu dem festen Netz verwendet werden.

4. System nach Anspruch 3, wobei die Umsetzungsfunktion <IWF> angepasst ist zur Umsetzung von GSM V.110, GMS ATRAU und RLP zu ISDN V.110 und/oder Modemprotokolle <LAMPM, V.34> an der Seite des festen Netzes.

## Revendications

1. Procédé pour une communication dans un Réseau d'Accès Radio Terrestre UMTS <UTRAN> comprenant un terminal mobile (MS) qui fonctionne en direction d'un Centre de Commutation de Mobile <MSC> comprenant une fonction d'interfonctionnement <IWF>,
**caractérise par:**
la réalisation du transport de données commutées par circuit dans des couches supérieures à partir de GSM, lequel utilise les protocoles RLP et L2R sur les couches de transport pour une parole UMTS;
la conversion des protocoles radio réels Couche 1 <L1>, Commande d'Accès au Support <MAC>, Commande de Liaison Radio <RLC> selon les protocoles Iu Couche 2 d'Adaptation ATM <AAL2> et Mode Transfert Asynchrone <ATM>; et
la conversion desdits protocoles lu selon des protocoles utilisés en direction d'un réseau fixe.

2. Procédé selon la revendication 1, dans lequel le transport RLP est réalisé conformément à un format GSM 14.4.

3. Système pour une communication entre un terminal <MS> dans un réseau d'accès sans fil, ledit terminal cartographiant des trames de Protocole de Liaison Radio <RLP> sur et à partir de la couche de Commande de Liaison Radio <RLC>, et un équipement de terminal dans un réseau fixe, ledit équipement de terminal utilisant des protocoles de couche supérieure GSM RLP et L2R sur des protocoles standards pour une parole UMTS pour un transport de couche inférieure,
**caractérisé par**:
un Réseau d'Accès Radio Terrestre UMTS <UTRAN> adapté pour convertir les protocoles radio réels Couche 1 <L1>, Commande d'Accès au Support <MAC>, Commande de Liaison Radio <RLC> selon les protocoles Iu Couche 2 d'Adaptation ATM <AAL2> et Mode Transfert Asynchrone <ATM>; et
un Centre de Commutation de Mobile UMTS <MSC> comprenant une fonction d'interfonctionnement <IWF> adaptée pour convertir lesdits protocoles Iu selon les protocoles utilisés en direction du réseau fixe.

4. Système selon la revendication 3, dans lequel ladite fonction d'interfonctionnement <IWF> est adaptée pour réaliser une conversion à partir de GSM V.110, GSM ATRAU et RLP selon ISDN V.110 et/ou des protocoles de modem <LAMPM, V.34> sur le côté de réseau fixe.
